Europäisches Patentamt

European Patent Office

Office européen des brevets

(11) Publication number: **0 666 163 A2**

# EUROPEAN PATENT APPLICATION

(21) Application number: 95100354.0

(22) Date of filing: **12.01.95**

(51) Int. Cl.6: **B29C 67/00**

(30) Priority: **04.02.94 US 191687**

(43) Date of publication of application:
**09.08.95 Bulletin 95/32**

(84) Designated Contracting States:
**DE FR GB**

(71) Applicant: **STRATASYS Inc.**
**14950 Martin Drive**
**Eden Prairie, MN 55344-2020 (US)**

(72) Inventor: **Batchelder, John Sam**
**2 Campbell Drive**
**Somers,**
**New York 10589 (US)**
Inventor: **Kaul, Anil**
**21 Biltom Road**
**White Plains,**

**New York 10607 (US)**
Inventor: **Korein, James Urey**
**8 Berry Brook Circle**
**Chappaqua,**
**New York 10514 (US)**
Inventor: **Ryan, Christopher John**
**5 Autumnleaf Drive**
**No. 21, Nashua,**
**New Hampshire 03060 (US)**
Inventor: **Tarabanis, Kostantinos Athanasios**
**144-38 25 Drive**
**Flushing,**
**New York 11354 (US)**

(74) Representative: **Waxweiler, Jean et al**
**Dennemeyer & Associates Sàrl**
**P.O. Box 1502**
**L-1015 Luxembourg (LU)**

(54) **A part fabrication method comprising a bridging technique.**

(57) A method of fabricating a part from a computer aided design model using a flowable material and suitable for bridging. The method comprises the steps of constructing at least a portion of a part by successively augmenting a base member (24) by applying new material (22) to the base member; and applying the new material (22) to the base member (24) according to a predetermined design such that construction forces are substantially resisted by axial tension in the newly applied material (22)

# FIG. 3a

EP 0 666 163 A2

Background of the Invention

This invention relates to a novel method suitable for fabricating a part in accordance with rapid prototyping techniques, the novel method, in particular, comprising a bridging technique.

Introduction to the Invention

Rapid prototyping techniques can provide a capability for building three-dimensional objects or parts directly from computer aided design (CAD) models.

This capability introduces a significantly enhanced flexibility in current manufacturing processes. For example, manufacturing processes that involve a design, redesign, prototyping or production of three-dimensional models, molds or patterns, may now be efficiently realized in a matter of hours or days, not months, thereby obviating slower, more complex and expensive manual machining techniques. Reference may be made for example to U.S. Patents Nos. 5,141,680, 5,137,662, 5,121,329, and 4,749,347.

Summary of the Invention

One motivation for our providing a part fabrication method comprising, in particular, a novel bridging technique, comes about with reference to a problem of providing support while fabricating a part.

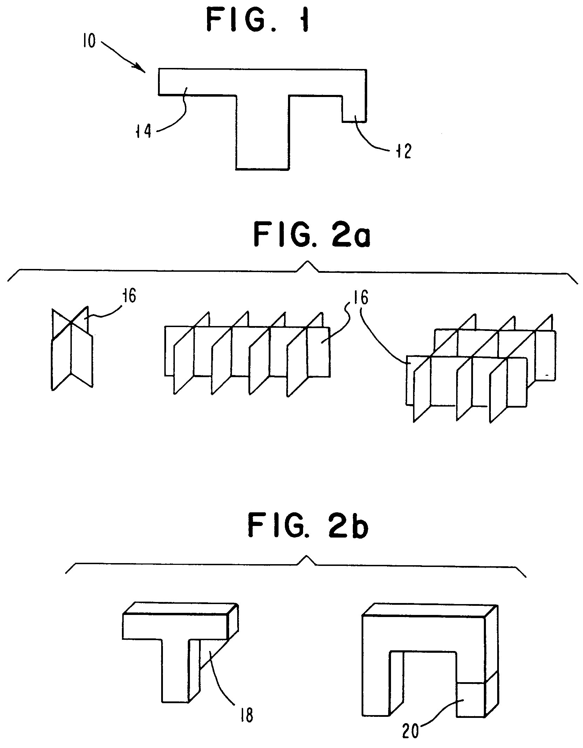

In particular, an important and common feature of rapid prototyping technologies is that objects or parts are typically fabricated in horizontal layers, from the bottom or ground, up. At any one moment of time during this horizontal part layer process, as illustratively shown in Figure 1, a part 10 may have an unsupported portion. For example, a feature comprising an "icicle" or a "stalactite" type geometry 12, with an unsupported portion, corresponds to a local minimum in the vertical (gravitational) direction. In addition, there may be an overhang 14 which is not supported from below. It is known that such a gravitationally unstable structure may collapse during construction, unless a temporary support means can be provided in order to prop up the unsupported portion, at least until the part can somehow become self-supporting.

A number of methods have been used (or proposed for use) to provide a requisite support means. For example, one method disclosed in U.S. Patent No. 4,999,143 provides actual building supports, such as web supports. Figure 2a shows various web supports 16, and FIG. 2b other exemplary supports 18, 20. Commercial products available for support purposes also include software packages, for example of the type available from Solid Concepts (Valencia, California) entitled Bridge Works, and Magics 2.1 Short Guide for Demo Version (Leuvun, Belgium 1991).

We have analyzed several of these various support means, and assayed their relative advantages and disadvantages. On a comparative basis, we have determined that one support means may take relatively more or less time to build than another such support means; that one support means may require relatively more or less of a substantial effort in order to be removed from the part, and without serious damage to an underlying part; or that one support means may more or less unduly qualify or limit part design in terms of its flexibility or innovation.

Based on this analysis, we conclude that it is desirable to build as few supports as is possible; that these supports preferably should use the smallest amount of material as is possible; and, that contact with a supported part should be minimized.

As alluded to above, one motivation for our providing a novel part fabrication method may be referenced to this problem of a viable support means.

We have addressed the support problem, however, from a unique vantage point; namely, that of providing a novel bridging technique which may be utilized in a complementary or auxiliary manner to existing support means.

In accordance with this novel bridging technique, it is possible to substantially reduce a required support structure. The novel bridging technique also realizes other significant advantages, specified below.

Accordingly, we now disclose a novel method for fabricating a part from a computer aided design model using a flowable material and suitable for bridging. The method comprises the steps of:
1) constructing at least a portion of a part by successively augmenting a base member by applying new material to the base member;
and
2) applying the new material to the base member according to a predetermined design such that construction forces are substantially resisted by axial tension in the newly applied material.

As just specified, the novel bridging method can realize a significant advantage, since it is now possible to substantially reduce a required support means. Moreover, correlate advantages may be realized, since less support means or structure can reduce requirements for post-processing of a part and can reduce fabrication times. Furthermore, the novel bridging method may be advantageously used to build near horizontal planar surfaces directly, without layering artifacts.

Brief Description of the Drawing

The invention is illustrated in the accompanying drawing, in which

FIG. 1 illustrates a part comprising unsupported portions;

FIGS. 2a and 2b show exemplary external part supports;

FIGS. 3a and 3b illustrate two cases of bridging in accordance with the present invention;

FIG. 4 shows key features of an extrusion apparatus suitable for realizing the present invention;

FIG. 5 shows joists and slabs which may be used to support a part;

FIG. 6 shows an example of a part having unsupported faces;

FIG. 7 shows an example of a part with vertical slabs;

FIG. 8 shows a part with joists used to support a part;

FIG. 9 shows a part with both slabs and joists;

FIG. 10 illustrates steps of a slab generation algorithm;

FIG. 11 shows a part layer (i) that comprises a first input to a path generation procedure;

FIG. 12 shows a part layer (i - 1) that comprises a second input to a path generation procedure;

FIG. 13 shows a part layer (i + 1) that comprises a second input to a path generation procedure;

FIG. 14 shows an open wire offset from a previous slice clipped to a current slice;

FIG. 15 illustrates a computation of open curve offsets which preserves a support condition;

FIG. 16 shows a boundary region path that needs to be supported;

FIGS. 17-19 are path generation examples; and

FIGS. 20 and 21 show joists for an unsupported region.

Detailed Description of the Invention

Definitions and Examples

The present invention is summarized above. We first set forth the following definitions and examples of words, phrases or concepts that are abstracted from the summarized invention, or may be used to reference preferred embodiments of the invention.

A "part" may reference any physical component or model, including a mechanical component, a toy, a medical prosthetic, or an architectural model, et cetera. It may also reference any portion or subcomponent of a part. It may further reference a support structure which may be built for the purpose of supporting a part, as well as a support structure in combination with some other subcomponent.

The phrase "computer aided design model" denotes a structure or file which can describe geometric characteristics of a physical object or part, and permit a computer to draw the part in any orientation.

The concept "bridging" references a construction technique in which a bead of material can resist construction forces by means of axial tension in the material. In this context, the bead of material is called a "bridge".

The phrase "base member" denotes a portion of a part which has already been constructed, or any other solid object residing in, or adjacent to, a work space where a part may be constructed.

The phrase "new material" denotes material which is in the process of being added to a base member.

The phrase "material applied according to a predetermined design" denotes material which is applied so as to have a particular geometric or physical relationship with a base member or with previously applied material.

The concept "construction forces" references forces which act on new material being added to a body during construction. Construction forces include gravity, adhesion to an extruding nozzle, and ambient fluid flow such as wind.

The phrase "substantial resistance by axial tension" denotes resistance which is sufficient to prevent more than a small displacement of the object of the axial tension from a position in which it is originally intended. For this purpose, a small displacement may be defined as one smaller than a diameter of an extruded material.

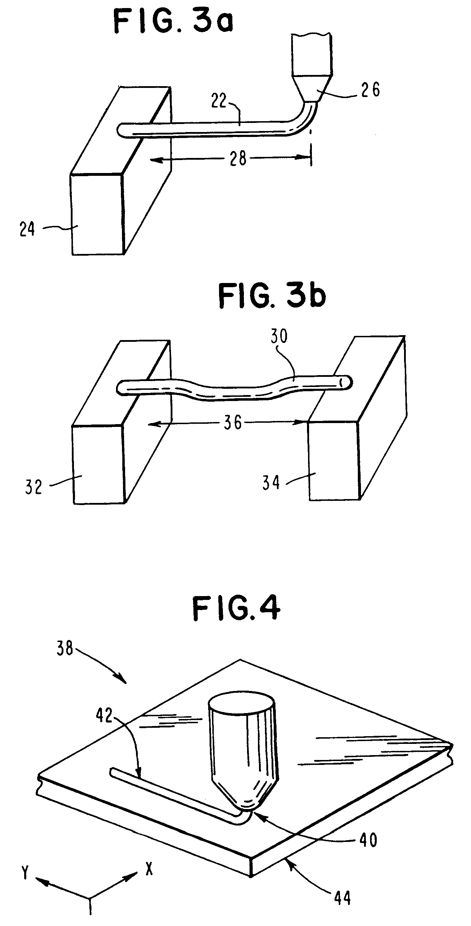

The phrase "bridge distance" refers to a maximum distance a bead of material can bridge without significant displacement (see Figure 3b). For this purpose, a significant displacement is more than one bead diameter.

The phrase "shelf distance" denotes a maximum horizontal distance one can shelve out, without significant vertical displacement.

Overview of the Bridging Method

As summarized above, the novel bridging method comprises constructing parts by extruding a flowable material that can take advantage of axial tension in a bead of materials as it is extruded, hence, "bridging".

The bridging method may be described, for any instantaneous moment, as follows.

In the course of building a part, there is at any instantaneous moment in time a portion of the part which has been constructed: this is called the base member. As new material is applied to the base member, a number of forces can act on that new material. These forces may include, inter alia, gravity, flow of air or another fluid medium, thermal contraction induced strain, or adhesion of new material to the base member and to an extrusion nozzle. These forces, as a group, are defined as construction forces. The novel bridging method comprises applying new material to the base member such that construction forces are substantially resisted by axial tension in the newly applied material.

Attention is directed to Figs. 3a, 3b which illustrate two cases of bridging. In FIG. 3a, new material 22 is bridging from a base member 24 to an extrusion nozzle 26, thereby defining a bridge of length bridge distance 28. In FIG. 3b, new material 30 is bridging from one portion of a first base member 32 to a portion of a second base member 34, thereby defining a bridge of length bridge distance 36. We note that we have demonstrated bridges of a length of approximately 12.5 mm, with a displacement of less than 2mm. In both cases of bridging, axial tension in the bead of material resists construction forces, like a cable.

Generally, in constructing a part or a support, a pattern of extrusion must be such that the new material bridges the previously extruded material in the base member, resisting gravity and other construction forces. Appropriate extrusion apparatus, materials and computational algorithms for effecting the bridging method are critical for realizing its effective application. Preferred such apparatus, materials and algorithms are now specified.

Preferred Embodiments: Apparatus, Materials and Algorithms

Attention is first directed to Fig. 4, which shows key features of an extrusion apparatus 38 suitable for realizing the present method. In overview, the extrusion apparatus 38 has a utility for producing a three-dimensional prototype part from computer aided design data, by controlling the position of a small nozzle 40, preferably from which flows a molten thermal plastic or a similar self-adhesive material 42.

In particular, software may be used (in a known way) to create thin, preferably horizontal cross-sections from a CAD solid model, which is preferably used to control the position of the small nozzle 40 as it moves in corresponding x-y planes. The molten thermal plastic or similar self-adhesive material 42 may be extruded from the nozzle 40, as it moves, thereby physically reproducing the layer represented by the CAD model. A rate of extrusion is preferably controlled to match the speed of the nozzle 40, and turned on and off when required.

When a first layer is completed, the nozzle 40 may be raised by the thickness of the layer just completed relative to a stage 44 on which the part rests, by an amount which preferably corresponds to a diameter of the nozzle 40 and resulting extruded bead. This process may be repeated for second and succeeding layers, until the prototype part is complete. Note that layers need not be of the same thickness, or of uniform thickness.

As just established, the Fig. 4 extrusion apparatus 38 has a general utility for realizing the steps of the present method. Since the present method has further limitations and requirements of realizability, including the recital of constructing at least a portion of an arbitrary part by successively augmenting a base member by applying new material to the base, in accordance with a predetermined design, we now turn to preferred computational algorithms that are useful for realizing these further limitations.

Preferred Embodiment: Geometric Issues

General Approach to Supports

Generating supports for certain critical portions of a part is an important step in the rapid prototyping process.

Since a part preferably is built in layers, from the bottom up, whenever a current layer, $L_i$, being built has portions which are not supported from below by an immediately previous layer, $L_{i-1}$, those portions of layer $L_i$ need to be propped up. Otherwise they can collapse, and the geometry of the finished part may not faithfully reproduce a geometry of the original part. To avoid such eventualities, we first determine the portions of a part where possibilities of such collapse may exist, and insert supports in those places. The approach to be used for generating supports is motivated by the following four considerations.

1. Often computing the path for a slice takes time comparable to that taken by actually building it. Therefore, the two processes are preferably structured as front end and back end processes, respectively, running in parallel. This considerably reduces the overall build time. In light of this, any support strategy that is used should not add unduly to the execution time of either the front end or the back end.

2. In producing supports, it is desirable to take into account not only the original geometry of the part, but also artifacts which may arise from slicing up the CAD model and generating paths.

3. In building supports, it is desirable to take advantage of certain properties of the building material. In particular, when a bead of material is laid under tension, it can bridge for some distance between two supports without significant displacement.

4. The supports support the paths used to fill the layers of the part.

To these ends, the following general approach to supports is preferred.

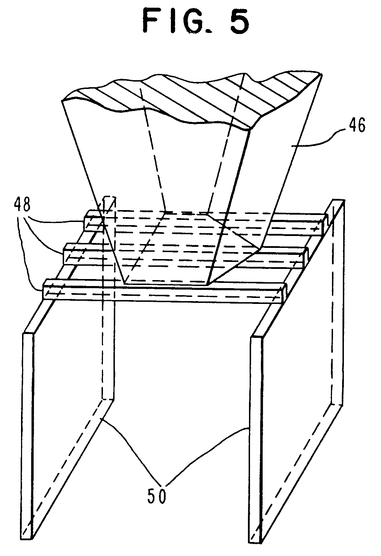

As shown in FIG. 5, we preferably support a part 46 on horizontal joists 48 which span between vertical slabs 50. We identify those portions of the part 46 that need to be supported. We then compute a set of parallel vertical slabs, spaced at bridge distance, in the neighborhood of these portions. Subsequently, when each layer is computed by slicing the part, the unsupported region of the slice is determined. At this time, joists which span between two slabs are computed to support these unsupported regions.

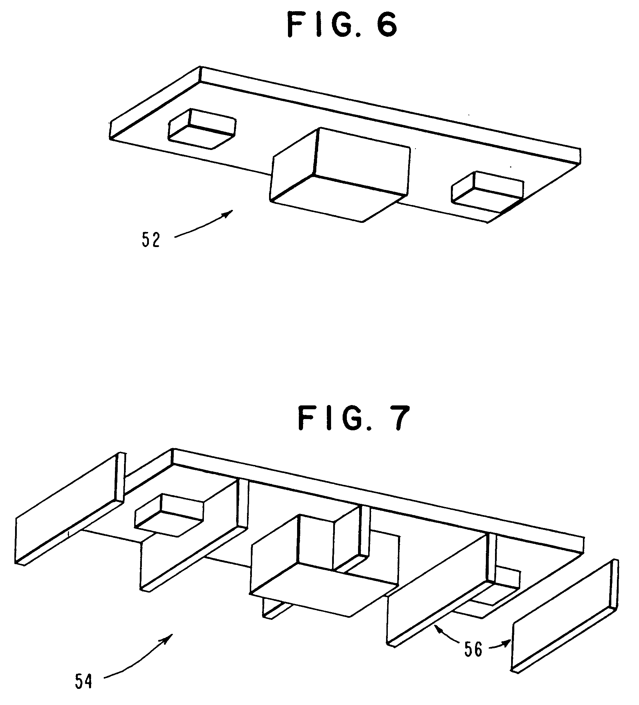

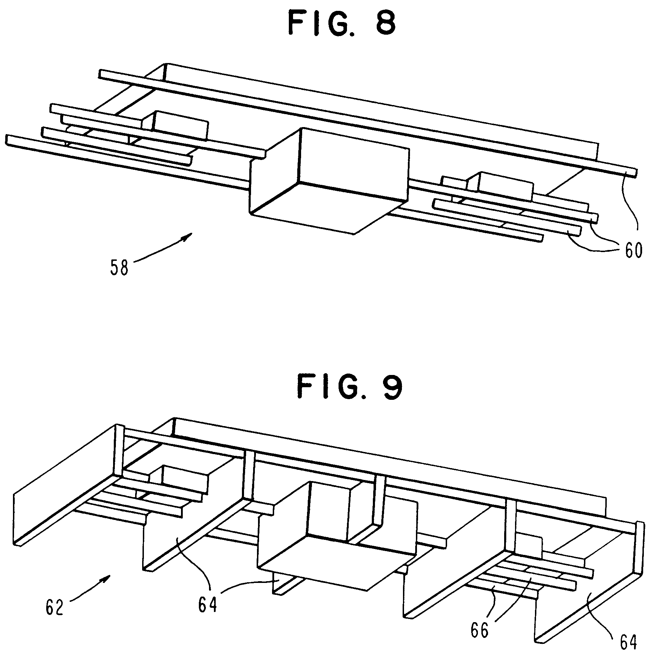

Figure 6 shows an example of a part 52 which has unsupported faces, while a part 54 with its corresponding vertical slabs 56 is shown in Figure 7. FIG. 8 shows a part 58 and joists 60 that are required to support the part 58. FIG. 9 shows a part 62 with both slabs 64 and joists 66.

Software which can perform these operations is detailed in the sections below.

Support Slab Generation

In this section, we describe a preferred algorithm to generate vertical slabs.

To determine the slabs, we require as input a boundary representation of the part model. Often the input is specified only in an STL format (see Stephen J. Rock. Solid freeform fabrication and cad interfacing. Technical Report 91036, Rensselaer Polytechnic Institute Design and Manufacturing Institute, December 1991).

The STL format represents the boundary of the part as a collection of triangles, with no neighborhood information. In this case, we preferably generate a complete boundary graph from the STL files and obtain a valid boundary representation for the object to be printed. This boundary representation preferably comprises a polyhedron consisting of faces, edges and vertices. We also require as input the characteristics of the material, preferably including the bridge distance for the particular material being used to make the part. Also, depending on the material, is the threshold angle for selecting minimum faces and edges. This is the angle between the normal to a planar face and the negative z-axis (downward direction). We refer to this threshold angle as the critical angle. If the angle between the normal to a face and the z-axis is greater than the critical angle, we preferably classify such a face as self supporting, and do not require supports for it. The same critical angle is used to determine minimum edges.

The Support generation algorithm determines a set of parallel slabs which can support any joists which may be required, and which are easily separable from the part.

The slabs algorithm is as follows.

Slab Generation Algorithm

Input: Boundary representation for input polyhedra (translated to fit into the 1st octant), Bridge distance (bd), Critical Angle (ca).

Output: Boundary Representation for vertical slabs perpendicular to the x-axis.

1. If the span of part along the x-axis is xmin to xmax, then construct planes $P_i$ given by:

$$\{x = i\ bd \mid 0 \le i \le \lfloor \frac{xmax}{bd} \rfloor\}$$

2. Determine all minimum faces F.
3. Determine all minimum edges E which do not bound any member of F.
4. Determine all minimum vertices V which does not bound any member of F or E.
5. Determine the span along the x-axis for each element in F, E, and V.
6. For each plane $P_i$, initialize a polygon $D_i$ = NULL.
7. For each face $f \in F$, with span $f_{xmin} \rightarrow f_{xmax}$, project f onto each plane $P_i$ in the vicinity of f to generate $V_f$. Plane $P_i$ is in the vicinity of f if

$$\{[\frac{f_{xmin}}{bd}] \le i \le [\frac{f_{xmax}}{bd}]\}.$$

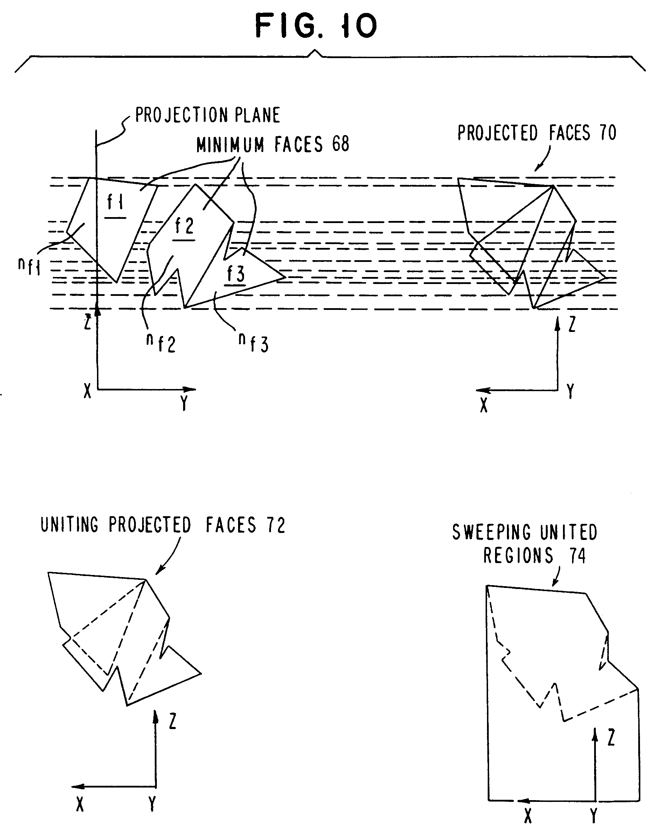

Figure 10a shows some minimum faces 68, looking down the x-axis. Figure 10b shows their projection 70, looking down the y-axis.

8. Similarly project each edge $e \in E$ and vertex $v \in V$ onto each plane $P_i$ in their vicinity. That is, where

$$\{[\frac{e_{xmin}}{bd}] \le i \le [\frac{e_{xmax}}{bd}]\} \ \text{and} \ \{[\frac{v_x}{bd}] \le i \le [\frac{v_x}{bd}]\}$$

respectively. Let the projected entities be $v_e$ and $v_v$ for projections of edges and vertices respectively.

9. Compute $D_i = D_i \cup v_f$ for each $V_f$ in $P_i$ (see Figure 10c, numeral 72).
10. Compute $D_i = D_i \cup v_e$ for each $V_e$ in $P_i$.
11. Compute $D_i = D_i \cup v_v$ for each $v_v$ in $P_i$.
12. If the span of $D_i$ along the z-axis is zmin $\rightarrow$ zmax, then for each region $D_i$ construct a region $U_i$, by sweeping $D_i$ along the negative z-axis by the amount zmax. That is, if $D_i$ contains a point (x, y, z), then $U_i$ will contain all points (x, y, z'), such that $0 \le z' \le z$. $D_i$ and $U_i$ are shown in Figure 10d, numeral 74.
13. For each plane $P_i$, find its intersection $I_i$ with the part, generating the slice of the part along $P_i$.
14. For each plane $P_i$, subtract $S_i$ from its corresponding region $U_i$ to generate the slab ($Sl_i$).
15. Thicken the planar regions $S_i$ by sweeping them along the y-axis by a small amount (usually a few bead widths) to create solid slabs.

We now discuss details of some of the steps in the above algorithm. Determining minimum faces requires finding the angle made by the face with the xy-plane. This can easily be accomplished by determining the angle made by the exterior normal to the face with the negative z-axis.

Let the exterior normal to a face, f, be denoted by $N_f$, and the tangent to an edge e bounding f, defined in terms of the right hand screw rule, be denoted by $T_e$. Then, given a face f and edge e, the inface normal, $N_{e,f}$, to e with respect to f is defined by the unit vector with direction $N_f \times T_e$, oriented such that it points towards the interior of the face.

Given this, we classify an edge to be a minimum edge if:

it is locally convex (i.e., not a reflex edge);

the inface normals of the faces bounded by the edge have negative dot products with the negative z-axis; and,

the angle it makes with the xy-plane is less than the critical angle.

6

A vertex is classified as a minimum vertex if the xy-plane is a local plane of support for the input polyhedra at that vertex and a vector along any edge emanating from the vertex has a negative dot product with the negative z-axis.

Applications of standard geometric modelling techniques can be exploited to compute Booleans, offsets and sweeps.

## Path Generation

In order to make parts of arbitrary geometries, a number of techniques are employed in the preferred embodiment. Parts are preferably built as a sequence of horizontal planar layers.

The path generation procedure, described here, generates a path for the FIG. 4 nozzle 40 to fill a (typically) planar layer. In the version of the procedure described, it is assumed that the layer will be filled with a bead of material with preferably constant width w.

In overview, a path to be generated preferably satisfies two unique conditions, in order for it be appropriate for the hardware technology that is used. The first condition is that a path must be such that any point in a region can be covered by the path of the FIG. 4 nozzle 40 exactly once while it is depositing material i.e., the single-pass condition. This single-pass condition guarantees that there are no unfilled or overfilled portions of a layer. The second condition is that the path must comprise segments which are entirely supported from below, or are shelves or bridges i.e., the support condition.

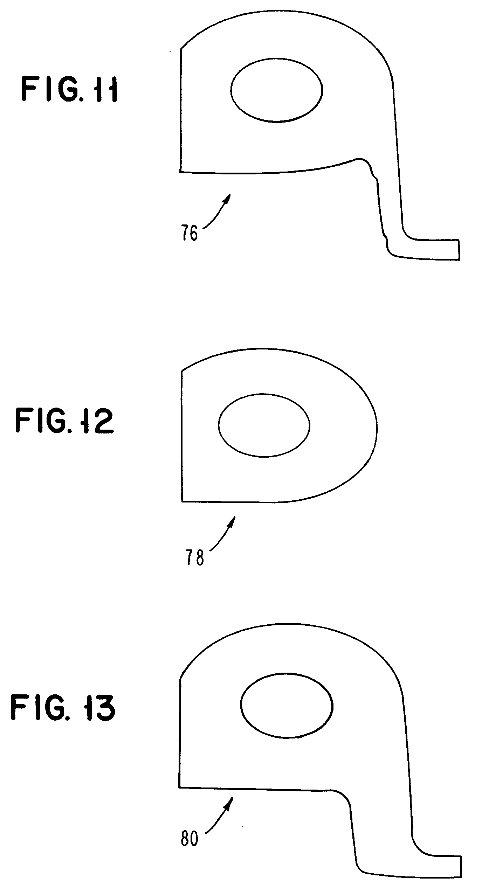

Preferably, there are three inputs to a path generation procedure. The first input comprises a part layer $L_i$, represented as a set of non-intersecting simple closed curve boundaries (see Figure 11, numeral 76). Here, each boundary preferably comprises line segments and possibly circular arcs. The second input comprises a layer below, $L_{i-1}$ (see Figure 12, numeral 78) and a layer above, $L_{i+1}$ (see Figure 13, numeral 80). The third input comprises a bead width, w.

An output from the path generation procedure comprises an ordered list of curves which fill (i.e., cover) the layer $L_i$. These paths may be open or closed curves; each preferably comprises straight line segments and circular arcs. The paths in the list are called $P_j$. The order of the paths is such that each is supported in some way, when it is built. Each path $P_j$ is labelled with one of the following tags:

Supported - the path is supported from below.

Shelved - the path is not supported from below, but shelves out from a previously laid adjacent bead.

Bridged - the path bridges from one supported point to another, and must be constructed under tension.

A first step of the path generation procedure partitions a layer to be filled into several distinct regions, each of which may be filled using a different strategy, depending on how it is supported and upon aesthetic requirements. This portion of the procedure may be described in accordance with the following set of instructions:

1. Compute a boundary region B of layer $L_i$ which is a portion of $L_i$ that lies within a small distance $d_b$ of the boundary. This region is important for the appearance (i.e., a look and feel) of the part, and greater care is preferably exercised in its filling (e.g., a slower movement of the nozzle 24). Let the remaining portion of $L_i$ be called $L_{\bar{i}}$.

2. Determine a supported region S of $L_{\bar{i}}$ which is a portion of $L_{\bar{i}}$ that is supported by the layer $L_{i-1}$ below.

3. Determine an unsupported region U of $L_{\bar{i}}$ which is the portion of $L_{\bar{i}}$ that is not supported by the layer $L_{i-1}$ below.

Once the layer $L_i$ is partitioned, preferably it is filled using one of the following three techniques.

1. Zig-zag - the region is filled with parallel adjacent line
    segments (axis parallel filling).

2. Closed curve offsets - the region is filled with offset curves from the entire boundary of the region to be filled (contour parallel filling). Each offset is a fixed distance inward from its predecessor. The process continues until the region is filled.

3. Open curve offsets - An open segment of the boundary is marked for offset. Offsets are computed only from this portion of the boundary. At each iteration, the result of the previous offset is again offset by the bead diameter w and the resulting offset is clipped to the region to be filled.

The order in filling the regions of $L_i$ is obviously important for satisfying the support condition. S is filled first, followed by U and then B. It is of note that the computed paths satisfy the single-pass and support conditions only approximately. The violations of these conditions are discussed in the following three sections.

### I. Path Generation for the Supported Region

Of the three regions into which $L_i$ is partitioned, the first region preferably to be filled is the supported region S. S can be filled using any of the above techniques, since the support condition is automatically met. For example, closed curve offsets or zig-zags can be used.

### Zig-zagging the Supported Region

Zig-zagging procedures are known and widely used for filling regions with pen plotters, and for clearing regions in numerically controlled machine tools.

### Filling the Supported Region with Closed Curve Offsets

Generally, offsets are often computed for the purpose of clearing material in numerically controlled machine tools. See, for example, the reference M. Held. <u>On the Computational Geometry of Pocket Machining,</u> Springer-Verlog, New York, 1991, and incorporated by reference herein.

When using closed curve offsets to fill the supported region, the entire boundary of S (i.e, all loops) is preferably successively offset by one half bead width (w), and then by integer multiples of the bead width w (i.e., $\frac{w}{2}$, $\frac{3}{2}$ $w$, $\frac{5}{2}$ $w$ etc.).

By computing offsets of the entire boundary of S, the resulting paths are closed and do not intersect the boundary of the S. If only a certain set of closed loops were to be chosen for offsetting, then the resulting offsets would need to be clipped to the region to be filled.

### Limitations in Filling the Supported Region

As described, both the zig-zag and the offset paths only approximately satisfy the single-pass condition stated earlier.

In particular, certain points are not filled because paths of width w cannot fit (void). Also, certain points are filled multiple times because local self-interference of a path is not checked (overfill).

To reduce the size of the voids, filling with fractional bead widths, up to some minimum bead diameter, preferably is currently employed. As for the overfilled portions, these are currently permitted. One relies on the shape conforming property and porosity of the filling material in order to accommodate this situation.

### II. Path Generation for the Unsupported Region

After filling the supported region S, paths are generated for the unsupported region U. In addition to the single-pass condition, the unsupported region U needs to be filled so as to satisfy the support condition as well. For this, the techniques of shelving and bridging preferably are employed. The procedure to fill U employs closed and open curve offsets and includes the following steps.

Unsupported Fill Algorithm

```
      Input:    U

      Output: Fill paths for U and the set of segments j of the
      boundary
             of U that need to be supported by external sup-
      ports.


             For each connected component u of U do:


             Let γ be the common boundary between S and u.


             If γ is null then


                 - Support the boundary of u with external
      support.
                 - Build the boundary of u on top of external
      supports.
                 - Fill u with closed curve offsets of its
      boundary.


             else



                 - Fill u with open curve offsets of γ.
                 - If the resulting number of offsets exceeds
      that
                    corresponding to the shelf distance
                       * Delete the open curve offsets.
                       * Fill u as in the case of γ being null.
```

In filling U by either closed or open curve offsets, the paths are preferably ordered (shelved) from the boundary to its interior, in order to satisfy the support criterion.

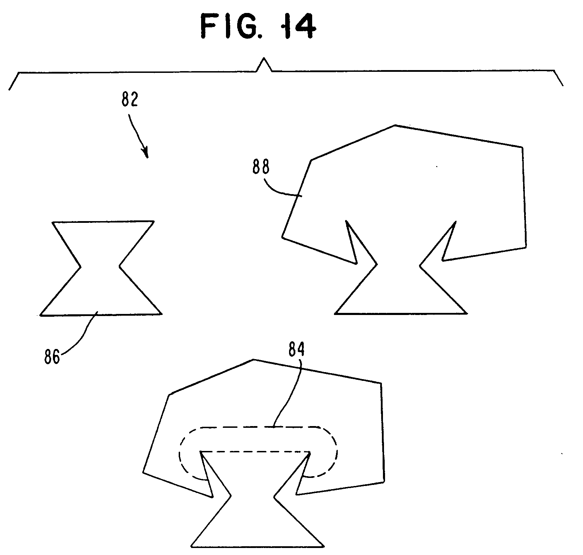

The offset of an open curve, as appropriate to our purposes, may be defined as the union of the offset to its interior and the offsets to its two endpoints. By the offset to the interior (i.e., the curve without its endpoints) we mean the offset to the curve at distance w as usually defined in the CAD context (see, for example, Farouki & Neff 1990, R.T. Farouki and C.A. Neff, Analytic properties of plane offset curves, Computer Aided Geometric Design 7, 83-99 (1990). By the offsets to the endpoints we mean circular arcs of radius w centered on those points that connect the ends of the interior offset to the open curve itself. For example, in Figure 14 (82), an open wire offset 84 from previous slice 86 is shown clipped to the region to be filled (88). Such a definition of an open curve offset is appropriate for the technique of shelving and enables the closed region to be completely filled by open curve offsets of a subset of its boundary.

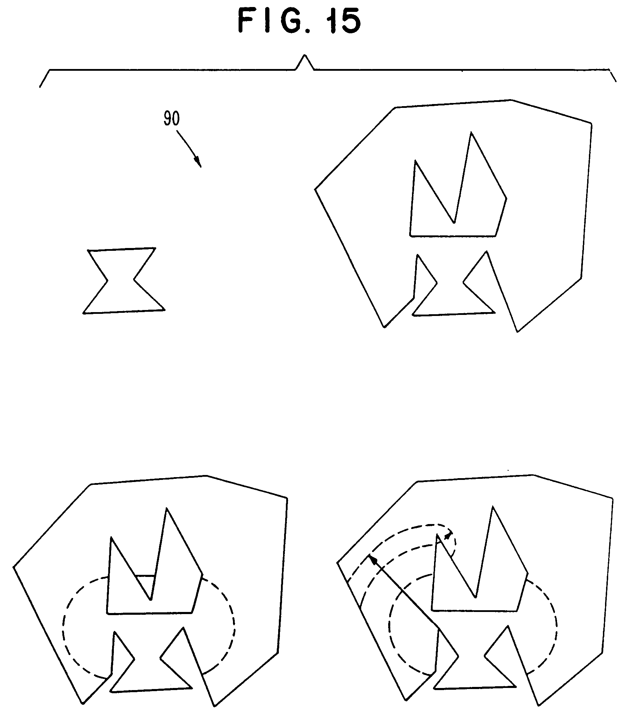

When computing closed curve offsets it is possible to compute the ith offset by either offsetting the original boundary curve by i x w or equivalently by offsetting the (i - 1)st offset curve by w. To avoid accumulation of numerical error the first computation is chosen in the case of closed curve offsets. However, in the case of open curve offsets these two computations are not equivalent due to the intervening clipping operation. In order to satisfy the support criterion the latter computation must be used in the case of open curve offsets. Thus, each open curve offset is computed from its predecessor rather than from the original boundary curve (see Figure 15, numeral 90).

III. Path Generation for the Boundary Region

The last region of $L_i$ to be filled is the boundary region B. This region comprises a certain number of closed curve offsets of the boundary of $L_i$. At the time the boundary region is to be filled, both the supported and the unsupported regions have already been deposited. Consequently, any boundary region path segment adjacent to either a supported or unsupported region path segment satisfies the support condition, since it can be shelved. However, there are two cases where boundary region path segments are not adjacent to any supported or unsupported region path segments:

1. there are no supported or unsupported region paths globally in the face.

For example, a face of a slice may be small and thus may be totally filled by the boundary region paths. All or certain segments of these paths may not lie over the previous layer, thus requiring external supports.

2. there are no supported or unsupported region paths locally in the vicinity of certain boundary region path segments.

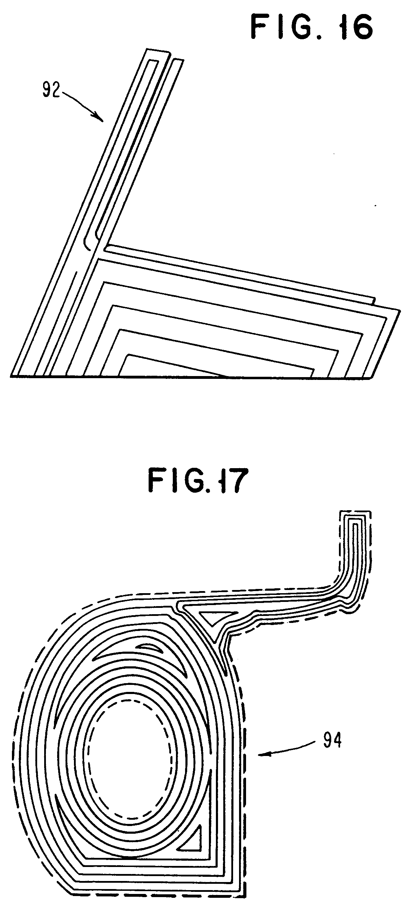

For example, in certain narrow portions of a region, a boundary region path may be adjacent to itself rather than to any supported or unsupported region path segments (see Figure 16, numeral 92).

In such cases, the support condition may be violated, and external supports are required for the unsupported segments of the boundary region paths.

The first case (i.e., where there are no supported or unsupported region paths globally in the face) can be identified readily. The unsupported segments of the boundary region paths are determined as the result of subtracting the previous layer from the boundary region paths of the current layer.

For the second case, the unsupported segments of the boundary region paths may be determined as follows:

1. Determine the portion $\hat{L}_{\bar{i}}$ of $L_i$ that was covered when filling S and U.

2. Compute $\hat{L}_i$ by offsetting the boundary of $\hat{L}_{\bar{i}}$ by the number of boundary layer offsets.

3. If the area of $\hat{L}_i$ is appreciably smaller than the area of the current layer $L_i$ then:

(a) Subtract $\hat{L}_i$ from the boundary region paths yielding $N_i$, the segments of boundary region paths that are not adjacent to any supported or unsupported path.

(b) Determine the unsupported portion $N_i^u$ of $N_i$ by subtracting the previous layer $L_{i-1}$ from $N_i$.

(c) Support $N_i^u$ with joists.

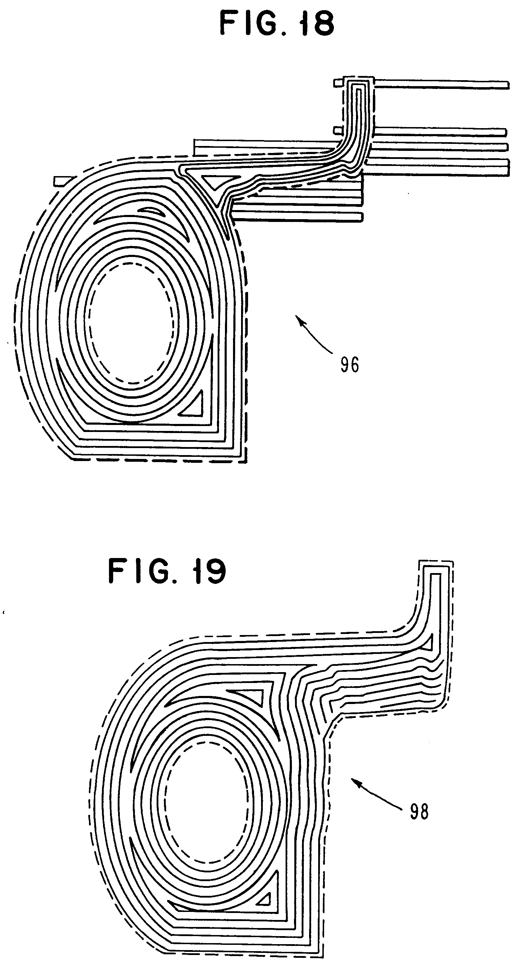

Path generation examples are shown in Figures 17 through 19 (numerals 94-98).

Support Joist Generation

When a layer is produced, all generated paths must be supported. Some regions are supported by the underlying layer of the part, $L_{i-1}$. Other regions are sufficiently narrow that beads may be "shelved" out from adjoining supported regions. If this is not the case, external support structures must be generated. This is done using joists. Joists are horizontal beams which run between two consecutive slabs (slabs were discussed in an earlier section).

In the course of path generation, when a region requiring joists is detected, that region is passed to a procedure to produce joists.

Joist Generation Algorithm

Input:

The boundary of a region R to be supported. The boundary is assumed to be a collection of non-overlapping simple polygons. If any edges are circular arcs, they may be broken into line segments.

A marking for each edge in the boundary of R, indicating whether it adjoins a supported region.

Output:

A set of joists $J_B$ which will support the portion of the boundary of R which does not adjoin supported regions.

A set of joists $J_Z$ which support the interior or R.

1. We discretize the rectangular region in which the slice lies, into a matrix of cells, each representing a region the length and width of a joist. This is analogous to mapping the region onto a grid of pixels, each of which is very long in y and narrow in x. Note that joists may only occur at these discrete positions, and they may not overlap.

2. We walk through the edges of region R, marking cells in the joist matrix required to support the boundary. These joist from a set called $J_B$.

(a) We adjust the position of each vertex to take into account forces exerted during part build.

(b) We mark the cell containing each (adjusted) vertex.

(c) We mark a neighboring cell if the vertex is too close to the edge of the cell containing the vertex. Whether the cell is "too close" is determined on the basis of the overlap between the cell and the edges of the polygon which are incident to the vertex.

(d) If an edge is longer than bridge distance, we create virtual vertices along the edge to break it up and mark the underlying cells.

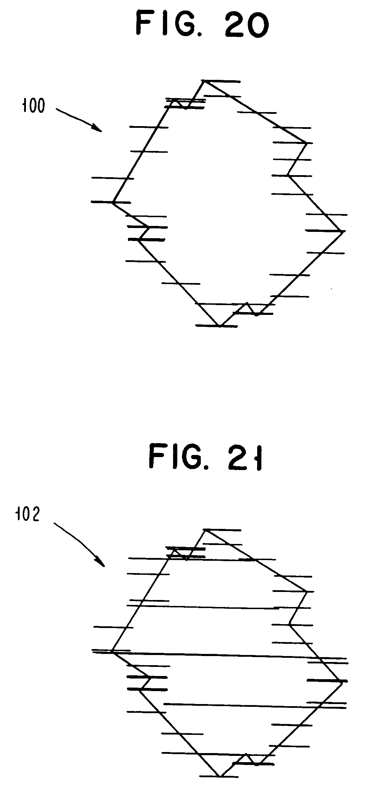

An example region and the joists in $J_B$ is shown in Figure 20, numeral 100.

3. To support the interior of region R, we generate zig-zag lines across the region, spaced at a distance of shelf distance. We then mark all joist cells $J_Z$ which lie beneath each zig-zag line.

4. We walk through the joist matrix, eliminating any redundant joists in $J_Z$. These are the joists which line between two joists in $J_B$ which are within self distance of each other. The collection of all joists (from both $J_B$ and $J_Z$) is shown in Figure 21, numeral 102.

5. We coalesce all end to end joists into single long joists (see Figure 21).

6. Joists may be built multiple times in the same location, to compensate for displacements due to gravity.

The joists which are generated for a layer $L_i$ must be built one or more layers below $L_i$. Typically the joists can be built at layer $L_{i-2}$.

A subsequent process is used to merge a stream of part layers in ascending Z order with a stream of joists and perforations in ascending Z order, to produce a stream of paths which contains both, and are in ascending Z order. This permits physical construction of each layer $L_i$ to commence as soon as joists for layer $L_{i+1}$ are computed.

**Claims**

1. A method for fabricating a part from a computer aided design model using a flowable material and suitable for bridging, the method comprising the steps of:

a) constructing at least a portion of a part by successively augmenting a base member (24) by applying new material (22) to the base member;

and

b) applying the new material to the base member according to a predetermined design such that construction forces are substantially resisted by axial tension in the newly applied material.

2. The method according to Claim 1,
wherein step (a) comprises applying new material to the base member by tracing a generated extrusion path.

3. The method according to Claim 1 or 2,
comprising the step of generating said extrusion path so that the path comprises segments which are entirely supported from below or are shelves or bridges.

4. The method according to any one of Claims 1 to 3,
wherein the base member comprises a molten thermal plastic.

5. The method according to any one of the preceding Claims wherein the new material comprises a molten thermal plastic.

6. The method according to any one of the preceding Claims, wherein an acting construction force consists of gravity.

# FIG. 1

# FIG. 2a

# FIG. 2b

# FIG. 3a

# FIG. 3b

# FIG. 4

14

# FIG. 5

# FIG. 6

52

# FIG. 7

54

56

# FIG. 8

58    60

# FIG. 9

62    64    66    64

# FIG. 10

PROJECTION PLANE
MINIMUM FACES 68

$n_{f1}$, $n_{f2}$, $n_{f3}$

f1, f2, f3

PROJECTED FACES 70

UNITING PROJECTED FACES 72

SWEEPING UNITED REGIONS 74

FIG. 11

76

FIG. 12

78

FIG. 13

80

# FIG. 14

# FIG. 15

90

# FIG. 16

# FIG. 17

EP 0 666 163 A2

# FIG. 18

96

# FIG. 19

98

# FIG. 20

100

# FIG. 21

102